# EUROPÄISCHE PATENTANMELDUNG

(11) **EP 4 481 298 A1**
(43) Veröffentlichungstag der Anmeldung: **25.12.2024**
(21) Anmeldenummer: 23210384.6
(22) Anmeldetag: 16.11.2023
(51) Int. Cl.: F24S 25/634, F24S 25/636, F24S 25/60, H02S 20/22

(54) **MODULKLEMME ZUM BEFESTIGEN MINDESTENS EINES SOLARMODULS**

(30) Priorität: 20.06.2023 DE 102023116114
(71) Anmelder: Renusol Europe GmbH, 51063 Köln (DE)
(72) Erfinder: Balen, Marko, 24257 Schwartbuck (DE); Heck, Dieter, 53579 Erpel (DE); Roßbach, Nils, 51103 Köln (DE); Schumacher, Christian, 50733 Köln (DE); Schwarz, Thomas, 53809 Ruppichteroth (DE); Steuer, Sven, 51766 Engelskirchen (DE)
(74) Vertreter: Patentanwälte Bauer Vorberg Kayser

(57) **Zusammenfassung**

Die Erfindung betrifft eine Modulklemme (14) zum Befestigen eines Solarmoduls (10) an einer Schiene (12),
- mit einem Fußelement (16) zur Anbindung an die Schiene (12),
- mit einem Haubenelement (18) zur Anlage an dem Solarmodul (10),
- mit einem Verbindungselement (20), welches das Fußelement (16) und das Haubenelement (18) miteinander verbindet,
wobei das Fußelement (16) in einer Hochrichtung (z) relativ zu dem Haubenelement (18) verlagerbar ist, wobei das Fußelement (16) an dem unteren Ende einen Verbindungsabschnitt (40) aufweist, wobei der Verbindungsabschnitt (40) nach Art eines Hammerkopfes ausgebildet ist.

Die Erfindung betrifft ferner ein System umfassend ein Solarmodul (10), eine Schiene (12) und eine solche Modulklemme (14) und ein Verfahren zur Montage einer Modulklemme (14) zum Befestigen eines Solarmoduls (10) an einer Schiene (10).

## Beschreibung

Die Erfindung betrifft eine Modulklemme gemäß Patentanspruch 1. Ferner betrifft die Erfindung ein System umfassend ein Solarmodul, eine Schiene und eine Modulklemme gemäß Patentanspruch 11. Die Erfindung betrifft auch ein Verfahren zur Montage einer Modulklemme gemäß Patentanspruch 13.

Es ist aus dem Stand der Technik bekannt, Solarmodule (auch als Solarpaneele bezeichnet) oder auch Solarthermie-Paneele auf schrägen oder flachen Dächern bzw. Untergründen zu befestigen. Zum Befestigen der Solarmodule werden diese üblicherweise auf Schienen montiert, wobei die Schienen selbst an dem Dach bzw. Untergrund befestigt sind.

Schienen bieten dabei die Möglichkeit die Solarmodule flexibel in verschiedenen Positionen entlang der Schiene anzuordnen. Die Anordnung und Befestigung der Solarmodule an der Schiene erfolgt häufig auf dem Dach. Es ist daher wünschenswert, dass die Solarmodule möglichst einfach, flexibel und sicher an der Schiene zu befestigen sind.

Aus dem Stand der Technik sind Modulklemmen bekannt, mittels welchen ein Solarmodul an einer Schiene festgeklemmt wird. Aus EP 2 984 417 A1 ist eine Modulklemme bekannt, welche zur Montage in der Schiene zwei federelastische Schenkel aufweist. Diese beiden Schenkel werden zum Einsetzen in die Schiene aufeinander zubewegt und federn nach dem Einsetzen in die Schiene aus, sodass sie die oberen Deckwände der Schiene hintergreifen und die Modulklemme so klemmend in der Schiene fixiert ist. Die Modulklemme wird entsprechend in die Schiene eingeclipst.

Die zugrundeliegende Aufgabe der Erfindung ist es, eine Modulklemme, ein System aus einem Solarmodul, einer Schiene und einer Modulklemme sowie ein Verfahren zur Montage einer Modulklemme zur Verfügung zu stellen, mittels welchen eine sichere, aber gleichzeitig einfache Anordnung einer Modulklemme und eines Solarmoduls an einer Schiene ermöglicht wird.

Die Lösung der Aufgabe erfolgt erfindungsgemäß mit den Merkmalen der unabhängigen Ansprüche. Weitere Vorteile und praktische Ausführungsformen sind zusammen mit den abhängigen Ansprüchen beschrieben.

Eine erfindungsgemäße Modulklemme dient zum Befestigen und insbesondere klemmenden Befestigen mindestens eines Solarmoduls an einer Schiene. Bei der Schiene handelt es sich insbesondere um eine herkömmliche Profilschiene, welche einen c-förmigen Querschnitt mit einer sich in Längsrichtung erstreckenden Nut und einem Spalt mit einer quer zur Längsrichtung der Schiene erstreckenden Spaltbreite b aufweist. Die Schiene weist insbesondere einen Boden, zwei Seitenwände und seitlich des Spaltes jeweils eine Deckwand auf.

Die Modulklemme ist mehrteilig ausgebildet und umfasst ein Fußelement zur Anbindung an die Schiene. Ferner weist die Modulklemme ein Haubenelement auf, welches zur Anlage an dem Solarmodul bzw. einem Rahmen des Solarmoduls ausgebildet ist. Das Fußelement und das Haubenelement sind mittels eines Verbindungselementes miteinander verbunden. Insbesondere ist als Verbindungselement eine Schraube vorgesehen, welche in das Haubenelement und das Fußelement hineinragt. Es können korrespondierend zu der Schraube in dem Haubenelement und dem Fußelement Innengewinde ausgebildet sein. Alternativ handelt es sich bei der Schraube um eine selbstschneidende Schraube.

Die Modulklemme weist eine sich in einer Hochrichtung (z-Richtung) erstreckende Höhe, eine sich in einer Querrichtung (y-Richtung) erstreckende Breite und eine sich in einer Längsrichtung (x-Richtung) erstreckende Länge auf.

Das Fußelement und das Haubenelement sind in Hochrichtung (z-Richtung) relativ zueinander verlagerbar. Dadurch ist das Haubenelement in unterschiedlichen Höhen in Bezug auf die Schiene anordenbar und somit können Solarmodule unterschiedlicher Stärken/Dicken mit der Modulklemme befestigt werden. Die Änderung und Fixierung der relativen Höhe erfolgt insbesondere mittels des Verbindungselementes. Ferner kann das Haubenelement relativ zu dem Fußelement um die Hochrichtung rotiert werden.

Insbesondere ist die Modulklemme so ausgelegt, dass sie als Endklemme und auch als Mittelklemme einsetzbar ist. Das heißt, mit einer Modulklemme können gleichzeitig zwei nebeneinander angeordnete Solarmodule befestigt werden oder nur ein Solarmodul.

Erfindungsgemäß weist das Fußelement an dem unteren Ende der Modulklemme einen Verbindungsabschnitt auf, wobei der Verbindungsabschnitt nach Art eines Hammerkopfes ausgebildet ist. Der Verbindungsabschnitt ist zum Einführen in die Schiene ausgebildet und ist in der Endmontagelage in der Nut, innerhalb der Schiene aufgenommen. Der restliche Teil des Fußelementes und der Modulklemme ist insbesondere außerhalb der Schiene angeordnet. Der Verbindungsabschnitt ist insbesondere als massives Teil und einstückig mit dem Fußelement ausgebildet.

Unter einer Form eines Hammerkopfes wird hier verstanden, dass die Grundfläche des Verbindungsabschnittes im Wesentlichen rechteckförmig ausgebildet ist, mit zwei langen Seiten und zwei kurzen Seiten. Der Verbindungsabschnitt ragt hier insbesondere in Querrichtung (y-Richtung) links und rechts gegenüber dem angrenzenden Abschnitt des Fußelementes hervor. Bevorzugt ragt der Verbindungsabschnitt auch nach vorne in Längsrichtung (x-Richtung) gegenüber dem angrenzenden Abschnitt des Fußelementes hervor und insbesondere nicht in nach hinten in Längsrichtung.

Für die Montage der Modulklemme in der Schiene bedeutet dies, dass der Hammerkopf zunächst derart ausgerichtet ist, dass sich die längeren Seiten in Längsrichtung der Schiene erstrecken und die kurzen Seiten in Querrichtung und der Verbindungsabschnitt so in die Schiene eingeführt wird. Nach Einführen des Verbindungsabschnittes wird die Modulklemme um 90° relativ zur Schiene verdreht, sodass sich die langen Seiten quer zum Spalt und zur Längsrichtung der Schiene erstrecken und die Modulklemme zwischen den Seitenwänden der Schiene eingeklemmt ist.

Durch einen solchen als Hammerkopf ausgebildeten Verbindungsabschnitt kann die Modulklemme durch Rotieren in der Schiene formschlüssig und kraftschlüssig fixiert werden. Eine 90° Drehung stellt dabei eine einfache, definierte Bewegung dar, welche bei einer Montage vor Ort leicht durchführbar ist. Eine entsprechende Drehung ermöglicht ferner am Montageort eine leichte visuelle Kontrolle, dass die Modulklemme sicher in der Endmontagelage angeordnet ist. Bei entsprechender Auslegung von Schiene und Verbindungsabschnitt wird eine haptische Rückmeldung gegeben, wenn der Verbindungsabschnitt durch das Verdrehen in der Schiene verklemmt ist.

Ein weiterer Vorteil dieser hammerkopfartigen Geometrie des Verbindungsabschnittes ist, dass das Fußelement (und auch das Haubenelement) kostengünstig aus Aluminium-Druckguss gefertigt werden können.

Insbesondere schließt sich der Verbindungsabschnitt an dem unteren Ende des Fußelementes an einen Halsabschnitt an. Der Halsabschnitt weist einen im Vergleich zum Verbindungsabschnitt geringeren Querschnitt auf und ragt durch den Spalt der Schiene.

Wie bereits beschrieben, weist der Verbindungsabschnitt insbesondere eine rechteckige Grundfläche auf. Um die Verdrehung innerhalb der Schiene bei der Montage zu erleichtern und eine bevorzugte Drehrichtung zu definieren, sind zwei gegenüberliegende Ecken der Grundfläche abgerundet. Nach dem Einsetzen des Verbindungsabschnittes in die Schiene wird das Fußelement bei der Montage um 90° gedreht und zwar so, dass die abgerundeten Ecken an den Seitenwänden der Schiene abgleiten. Nach einer Drehung um 90° ist die Endmontagelage erreicht und aufgrund der nicht abgerundeten Ecken wird ein Weiterdrehen verhindert. Dies dient gleichzeitig als haptische Rückmeldung, dass die Modulklemme montiert ist. Ist die Modulklemme in einer Endmontagelage in der Schiene montiert und wird nun zur klemmenden Befestigung eines Solarmoduls das Verbindungselementes angezogen, wird durch die nicht-abgerundeten Ecken ein zusätzlicher Verdrehwiderstand bewirkt.

In einer praktischen Ausführungsform der Modulklemme bildet die Oberseite des Verbindungsabschnittes mindestens eine erste Anlagefläche, welche zur Anlage von innen an die jeweils den Spalt begrenzenden Deckwand der Schiene vorgesehen ist. Die Anlagefläche erstreckt sich insbesondere eben in der x-y-Ebene. In Hochrichtung (z-Richtung) davon beabstandet ist an dem Fußelement eine zweite Anlagefläche ausgebildet. Diese zweite Anlagefläche dient zur Anlage von außen an die den Spalt begrenzende Deckwand der Schiene und liegt von oben an der Schiene an. Die zweite Anlagefläche erstreckt sich insbesondere auch eben in der x-y-Ebene. Die oberen Deckwände der Schiene sind dann zwischen der ersten Anlagefläche und der zweiten Anlagefläche aufgenommen. Insbesondere sind die Schiene und die Modulklemme so dimensioniert, dass der Abstand zwischen der ersten Anlagefläche und der zweiten Anlagefläche genau der Wandstärke der Schiene entspricht und das Fußelement in Hochrichtung betrachtet formschlüssig in der Schiene aufgenommen ist.

Insbesondere ist der Verbindungsabschnitt so in Bezug auf das Fußelement und insbesondere auch die Modulklemme angeordnet, dass der Verbindungsabschnitt in einer Seitenansicht in Bezug auf eine Mittelachse außermittig angeordnet ist. Die Mittelachse des Fußelementes entspricht insbesondere der Mittelachse der Öffnung für das Verbindungselement. Der Verbindungsabschnitt ist insbesondere in Längsrichtung gegenüber der Mittelachse versetzt angeordnet. In einer Vorderansicht ist das Fußelement spiegelsymmetrisch und in einer Seitenansicht ist das Fußelement asymmetrisch in Bezug auf die Mittelachse. In Zusammenspiel mit der zweiten Anlagefläche, welche sich im Gegensatz zum Verbindungsabschnitt auch auf der anderen Seite der Mittelachse erstreckt, wird durch diese Asymmetrie ein Verkippen der Modulklemme bei Soglasten auf das Solarmodul verhindert.

Weiterhin kann der Halt der Modulklemme in der Schiene verbessert werden, wenn die Oberseite des Verbindungsabschnittes zumindest teilweise eine Riffelung aufweist. Eine geriffelte Oberfläche erhöht den Widerstand gegen ein Verschieben der Modulklemme entlang der Schiene. Die Riffelung erstreckt sich insbesondere in Querrichtung der Modulklemme, sodass die Riffelung in der Endmontagelage der Modulklemme in der Schiene senkrecht zur Längsrichtung der Schiene ausgerichtet ist.

In einer weiteren praktischen Ausführungsform kann der Verbindungsabschnitt an einem Übergang von einer Bodenfläche zu einer Rückseite eine Fase bzw. eine Einführschräge aufweisen. Die Fase ist insbesondere dann von Vorteil, wenn die Grundfläche des hammerkopfartigen Verbindungsabschnittes zwei kurze Seiten aufweist, deren Längen größer sind als die Breite des Spaltes in der Schiene. In diesem Fall muss die Modulklemme mit dem Verbindungsabschnitt schräg in die Schiene eingesetzt werden, wobei die Fase als Einführschräge dient. Damit kann dann die Länge der kurzen Seiten maximiert werden, um die Auflagefläche zwischen Verbindungsabschnitt und Schiene (Deckwand) bei einer Zugbeanspruchung, d.h. bei einer Krafteinwirkung aus der Schiene heraus, zu maximieren.

Alternativ oder in Ergänzung dazu weist der Halsabschnitt eine Fase bzw. Einführschräge auf, wobei insbesondere die Vorderseite des Halsabschnittes schräg zur Hochrichtung verläuft. Bei einem schrägen Einführen des Fußelementes in die Schiene, gleitet die Schiene insbesondere unten an der Schräge am Verbindungsabschnitt ab und oben an der Schräge am Halsabschnitt.

Der Halsabschnitt ist insbesondere im Querschnitt, d.h. in einer x-y-Ebene, betrachtet unrund ausgebildet. Der Halsabschnitt weist insbesondere eine sich gerade erstreckende Anlagekante auf, welche in einer Endmontagelage seitlich an einer Deckwand der Schiene anliegt, um einen möglichst großen Kontaktbereich zur Schiene zu haben.

Insbesondere stützen sich das Fußelement und das Haubenelement direkt aneinander ab. Das Fußelement und das Haubenelement weisen jeweils entsprechende Kontaktflächen auf. Die korrespondierenden Kontaktflächen weisen an ihren zueinander weisenden Seiten jeweils eine Riffelung auf. Insbesondere weist sowohl das Fußelement an der einem ersten Kontaktfläche als auch das Haubenelement an der korrespondierenden zweiten Kontaktfläche eine Riffelung auf. Die Riffel erstrecken sich jeweils in Querrichtung. Durch die Riffelung wird zum einen einem leichten Abgleiten des Haubenelementes an dem Fußelement entgegengewirkt. Zum anderen ergibt sich auch eine definierte Kraft, welche beim Schrauben des Verbindungselementes zur Verlagerung des Haubenelementes aufgebracht wird. Weiterhin bewirkt es, dass das Haubenelement "gerade", d.h. in der x-y-Ebene liegend ausgerichtet bleibt und nicht gegenüber dem Fußelement verkippt.

Insbesondere erstreckt sich die Kontaktfläche des Fußelementes schräg zur Hochrichtung. Das Fußelement ist demnach zumindest in einer Seitenansicht keilförmig ausgebildet. Insbesondere erstreckt sich auch die Kontaktfläche des Haubenelement schräg zur Hochrichtung. Durch die Keilform wird ein noch besserer Halt des Haubenelementes an dem Fußelement bewirkt und einem Abrutschen entgegengewirkt.

In einer weiteren praktischen Ausführungsform der Modulklemme weist das Fußelement in dem Kontaktbereich eine Abstützrippe zur Vormontage des Haubenelementes auf. Die Abstützrippe ragt insbesondere gegenüber der ersten Kontaktfläche hervor und ist L-förmig ausgebildet, sodass das Haubenelement nach unten in Hochrichtung und in Querrichtung formschlüssig aufgenommen ist. Die Modulklemme kann so bereits vormontiert werden und als Einheit transportiert werden. Die Abstützrippe dient ebenfalls als Verdrehsicherung des Haubenelementes beim Einsetzen der Modulklemme in die Schiene. Bei Festziehen des Verbindungselementes und einer Verlagerung des Haubenelementes gegenüber dem Fußelement kann durch die Abstützrippe durch die Schraubkraft einfach abgeschert werden.

Das Haubenelement weist insbesondere an einer zum Fußelement (und zum Solarmodul) gerichteten Anlagefläche mindestens einen Dorn auf. Wenn die Modulklemme auch als Mittelklemme eingesetzt wird, kann die Modulklemme insbesondere zwei, voneinander beabstandete Dorne aufweisen. Der mindestens eine Dorn drückt sich bei einer klemmenden Befestigung eines Solarmoduls in die Eloxalschicht eines Modulrahmens und bewirkt einen Potentialausgleich zwischen Modul und der Schiene bzw. im Fall einer Mittelklemme zwischen zwei Modulen.

Die Erfindung betrifft auch ein System umfassend ein Solarmodul, eine Schiene und eine Modulklemme, insbesondere eine wie vorstehend beschriebene Modulklemme. Mittels der Modulklemme ist das Solarmodul gegenüber der Schiene klemmend befestigt. Das Haubenelement liegt dabei an der Oberfläche des Solarmoduls bzw. eines Rahmens an und klemmt das Solarmodul gegen die Schiene. Die Modulklemme weist einen Verbindungsabschnitt an einem Fußelement auf, wobei das Verbindungselement in der Schiene angeordnet ist und wobei der Verbindungsabschnitt nach Art eines Hammerkopfes ausgebildet ist, mit einer rechteckförmigen Grundfläche mit zwei langen Seiten und zwei kurzen Seiten, und wobei die Länge der langen Seiten größer ist als die Breite des Spaltes in der Schiene.

Wie vorstehend bereits beschrieben, wird durch das hammerkopfartige Verbindungselement an der Modulklemme eine sichere und leicht zu überprüfende Positionierung der Modulklemme in der Schiene ermöglicht, die wiederrum eine sichere Montage des Solarmoduls zur Folge hat.

Insbesondere sind ebenfalls die kürzeren Seiten des Verbindungsabschnittes länger als die Spaltbreite in der Schiene. Dies hat zur Folge, dass die Modulklemme schräg in die Schiene eingesetzt werden muss, jedoch kann dadurch die Grundfläche des Verbindungsabschnittes maximiert werden und insbesondere die Fläche, die mit den Deckwänden der Schiene von innen zur Anlage kommt.

Insbesondere ist der Abstand zwischen der Oberseite des Verbindungsabschnittes, welche mit ersten Anlageflächen von innen an der Unterseite der Deckwände der Schiene anliegt, und eines Kragens mit einer zweiten Anlagefläche, welche an der Oberseite der Deckwände der Schiene anliegt, so dimensioniert, dass die Deckwände passgenau zwischen den ersten Anlageflächen und der zweiten Anlagefläche aufgenommen ist.

Die Erfindung betrifft ferner ein Verfahren zur Montage einer Modulklemme, insbesondere einer wie vorstehend beschriebenen Modulklemme in einer Schiene, wobei ein Fußelement der Modulklemme zunächst mit einem hammerkopfartigen Verbindungsabschnitt in die Schiene derart eingesetzt wird, dass sich die langen Seiten des Verbindungsabschnittes in Längsrichtung der Schiene erstrecken. Nach Einsetzen des Verbindungsabschnittes in die Schiene wird anschließend das Fußelement um die Hochrichtung verdreht, bis sich die langen Seiten quer zur Längsrichtung der Schiene erstrecken und das Fußelement zwischen den Seitenwänden der Schiene klemmend fixiert ist. Insbesondere wird das Fußelement um 90° verdreht.

Wenn auch die kurzen Seiten des Verbindungsabschnittes länger sind als die Spaltbreite in der Schiene, wird insbesondere wir der Verbindungsabschnitt beim Einsetzen schräg in die Schiene eingeführt.

Weitere praktische Ausführungsformen und Vorteile sind nachfolgend in Verbindung mit den Figuren beschrieben. Es zeigen:
- Fig. 1: ein System aus einem Solarmodul, einer Schiene und einer Modulklemme in einem Querschnitt von der Seite,
- Fig. 2: eine Modulklemme in einer perspektivischen Ansicht von schräg oben,
- Fig. 3: die Modulklemme in einer Seitenansicht,
- Fig. 4: die Modulklemme in einer Vorderansicht,
- Fig. 5: die Modulklemme in einem Schnitt gemäß Schnittlinie A-A aus Fig. 4
- Fig. 6: ein Fußelement in einer perspektivischen Ansicht von schräg vorne,
- Fig. 7: das Fußelement in einer Seitenansicht,
- Fig. 8: das Fußelement in einer Vorderansicht,
- Fig. 9: das Fußelement in einer Ansicht von unten,
- Fig. 10: das Fußelement in einem Schnitt gemäß Linie B-B aus Fig. 8,
- Fig. 11: ein Haubenelement in einer perspektivischen Ansicht von schräg vorne,
- Fig. 12: das Haubenelement in einer Seitenansicht,
- Fig. 13: das Haubenelement in einer Vorderansicht,
- Fig. 14: eine Anordnung einer Modulklemme gemäß Figuren 2 bis 5 und einer Schiene, in einer ersten Relativposition von Modulklemme und Schiene in einer perspektivischen Ansicht,
- Fig. 15: die Anordnung aus Fig. 13 in einer Seitenansicht,
- Fig. 16: die Anordnung aus Fig. 13, in einer zweiten Relativposition von Modulklemme und Schiene in einer perspektivischen Ansicht,
- Fig. 17: die Anordnung aus Fig. 16 in einer Seitenansicht,
- Fig. 18: die Anordnung aus Fig. 13, in einer dritten Relativposition von Modulklemme und Schiene in einer perspektivischen Ansicht,
- Fig. 19: die Anordnung aus Fig. 18 in einer Seitenansicht,
- Fig. 20: die Anordnung aus Fig. 13, in einer vierten Relativposition von Modulklemme und Schiene in einer perspektivischen Ansicht und
- Fig. 21: die Anordnung aus Fig. 20 in einer Seitenansicht.

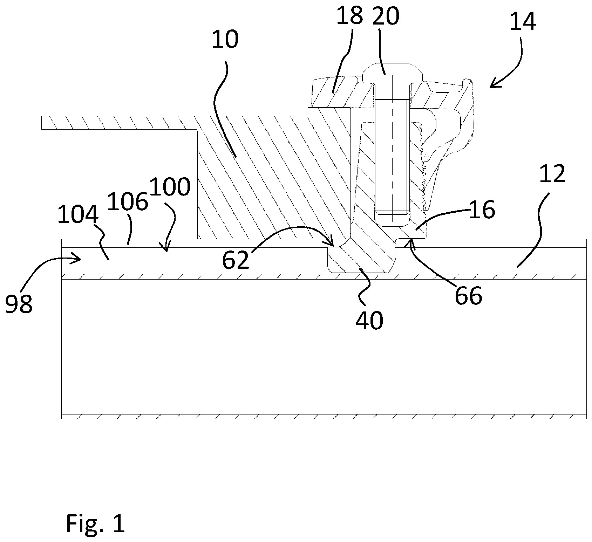

In Fig. 1 ist ein System aus einem Solarmodul 10, einer Schiene 12 und einer Modulklemme 14 in einem Schnitt dargestellt. Der Begriff Solarmodul 10 umfasst hier das Modul selbst mitsamt dem Rahmen.

Wie gut erkennbar ist, dient die Modulklemme 14 dazu, das Solarmodul 10 klemmend an der Schiene 12 zu befestigen. Dazu weist die Modulklemme 14 ein Fußelement 16 auf, welches hier zum Teil in der Schiene 12 aufgenommen ist und ein Haubenelement 18, welcher zur Anlage mit dem Solarmodul 10 kommt. Mittels eines Verbindungselementes 20 - hier einer Schraube - wird das Solarmodul 10 in bekannter Weise gegen die Schiene 12 verspannt.

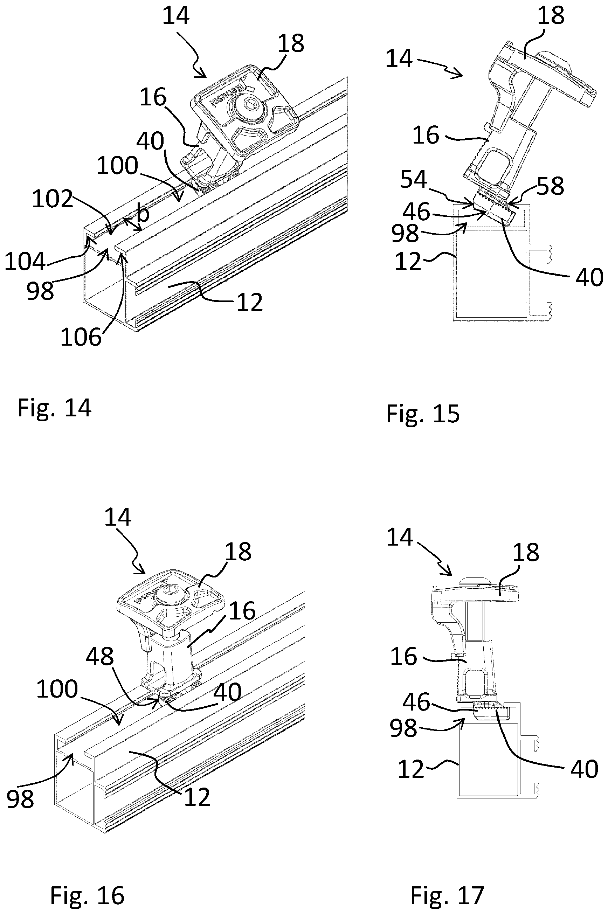

Die Schiene 12 ist hier als Profilschiene mit c-förmigem Querschnitt ausgebildet. Die Schiene 12 weist eine sich in Längsrichtung der Schiene erstreckende Nut 98 und einen sich in Längsrichtung der Schiene 12 erstreckenden Spalt 100 mit einer Spaltbreite b auf (vgl. auch Figuren 14 bis 21). Die Schiene 12 weist einen Boden 102, zwei Seitenwände 104 und zwei links und rechts des Spaltes 100 angeordnete Deckwände 106 auf.

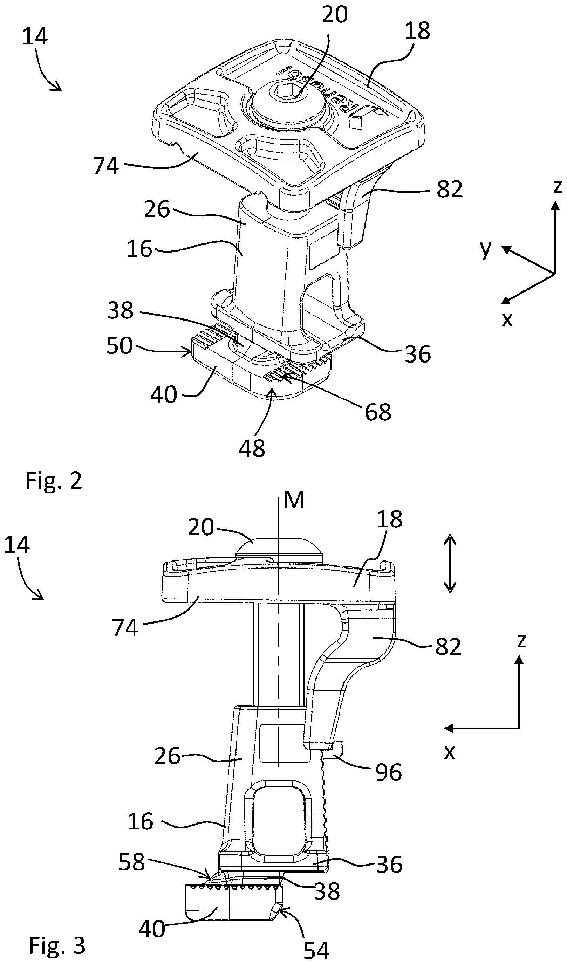

Im Folgend wird in Zusammenhang mit den Figuren 2 bis 12 die Modulklemme 14 im Detail beschrieben.

Die Figuren 2 bis 5 zeigen eine Modulklemme 14, umfassend das Fußelement 16, das Haubenelement 18 und das Verbindungselement 20. Vorliegend ist die Modulklemme 14 demnach dreiteilig ausgebildet. Die Modulklemme 14 ist hier aus Aluminium mittels Aluminium-Druckguss hergestellt.

Die Modulklemme 14 weist hier eine Höhe in Hochrichtung (z-Richtung), eine Länge in Längsrichtung (x-Richtung) und eine Breite in Querrichtung (y-Richtung) auf.

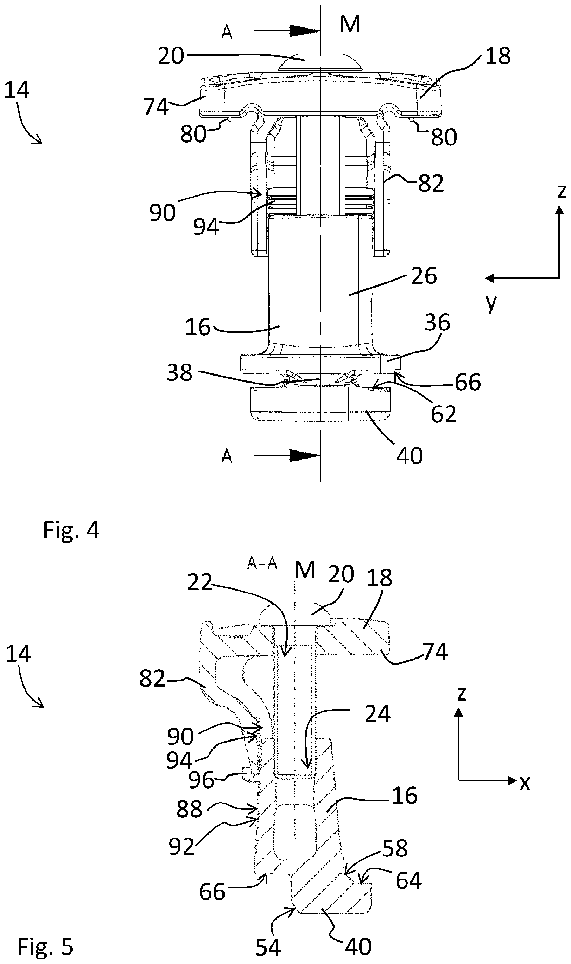

Das Fußelement 16 und das Haubenelement 18 sind in Hochrichtung (z-Richtung) relativ zueinander verlagerbar (vgl. Doppelfeil in Fig. 3). Durch die veränderbare Relativposition sind zwischen der Schiene 12 und dem Haubenelement 18 mittels der Modulklemme 14 Solarmodule 10 unterschiedlicher Höhe bzw. Materialstärke befestigbar. Das Fußelement 16 und das Haubenelement 18 sind vorliegend mittels der Schraube 20 miteinander verbunden. Die Schraube 20 erstreckt sich durch miteinander fluchtende Öffnungen 22, 24 jeweils in dem Fußelement 16 und in dem Haubenelement 18. In dem Fußelement 16 ist in der Öffnung 24 ein Innengewinde vorgesehen. Die Mittelachse M der Öffnungen 22, 24 bzw. des Verbindungselementes 20 bildet auch die Mittelachse M der Modulklemme 14. In einer Vorderansicht (vgl. Fig. 4) ist die Modulklemme 14 spiegelsymmetrisch zur Mittelachse M ausgebildet.

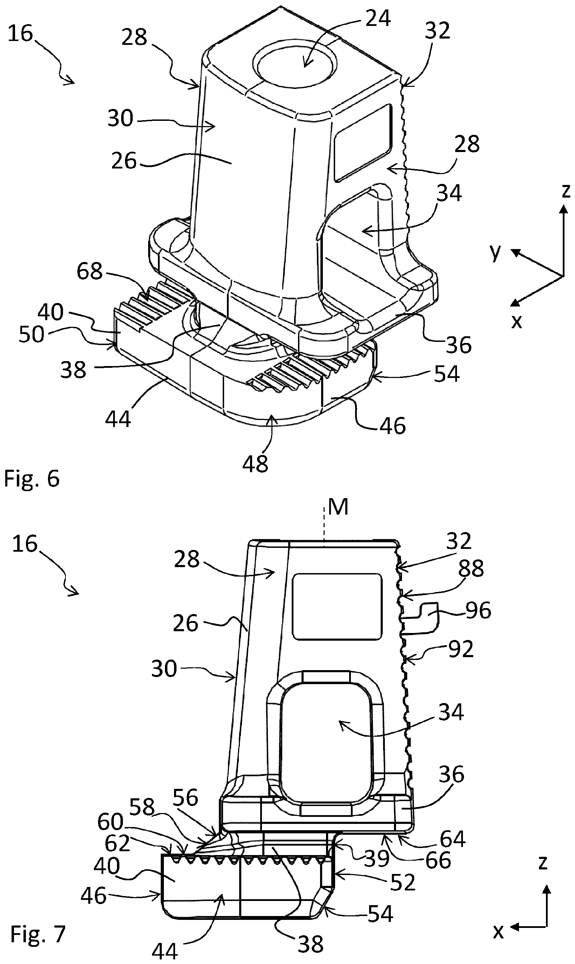

Das Fußelement 16, welches in den Fig. 6 bis 10 separat abgebildet ist, weist einen Basisabschnitt 26 auf. Der Basisabschnitt 26 ist im Wesentlichen als Quader ausgebildet, die Seitenflächen 28 sind parallel zur Hochrichtung (z-Richtung) ausgebildet und die Vorderfläche 28 und die Rückfläche 30 relativ zur Hochrichtung geneigt, so dass die Querschnittsfläche des Basisabschnittes 26 in Hochrichtung betrachtet abnimmt.

In dem Basisabschnitt 26 ist eine sich zwischen den Seitenfläche 28 durchgängig erstreckende Durchgangsöffnung 34 ausgebildet. Oberhalb der Durchgangsöffnung 34, in Richtung des Haubenelementes 18 ist die Öffnung 24 für das Verbindungselement 20 ausgebildet und mündet in die Durchgangsöffnung 34.

An dem unteren Ende des Basisabschnittes 26 ist ein Kragen 36 ausgebildet. Der Kragen 36 erstreckt sich im Wesentlichen ausgehend von den Seitenflächen 28 zur Seite (y-Richtung).

Nach unten an den Basisabschnitt 26 anschließend, d.h. an der dem Haubenelement 28 abgewandten Seite, ist ein Halsabschnitt 38 ausgebildet. Der Halsabschnitt 38 weist eine kleinere Querschnittsfläche auf als die daran angrenzenden Abschnitte 26, 40 des Fußelementes 16.

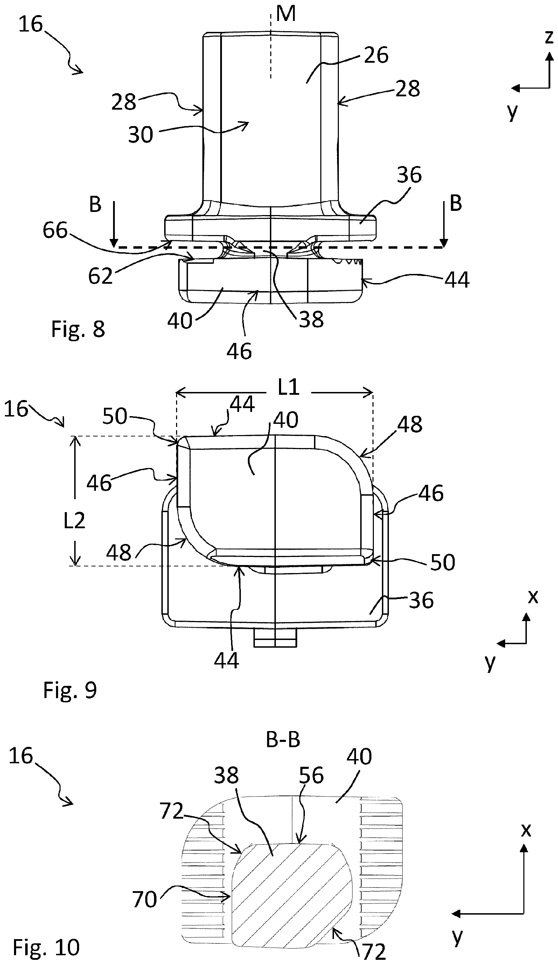

An den Halsabschnitt 38 anschließend, am unteren Ende des Fußelementes 16, ist ein Verbindungsabschnitt 40 ausgebildet. Der Verbindungsabschnitt 40 ist zur Anordnung innerhalb der Schiene 12 vorgesehen. Der Verbindungsabschnitt 40 ist nach Art eines Hammerkopfes ausgebildet und weist eine rechteckige Grundfläche auf (vgl. Fig. 9). Der Verbindungsabschnitt 40 erstreckt sich in Längsrichtung (x-Richtung) gegenüber dem Halsabschnitt 38 nach vorne. Die Rückfläche 39 des Halsabschnittes und die Rückfläche 52 des Verbindungsabschnittes gehen in einer Ebene (y-z-Ebene) ineinander über (vgl. Fig, 7).

Wie in Fig. 9 gut erkennbar ist, weist die Grundfläche zwei lange Seiten 44 mit einer ersten Länge L1 auf, wobei sich die langen Seiten 44 in Querrichtung (y-Richtung) erstrecken, und zwei kurze Seiten 46 mit einer zweiten Länge L2, wobei sich die kurzen Seiten in Längsrichtung (x-Richtung) erstrecken. Wie auch in Verbindung mit Fig. 14 bis 21 noch erläutert, ist die Länge L1 der langen Seiten 44 so gewählt, dass diese größer ist als die Breite b des Spaltes 100 der Schiene 12 und passgenau zwischen den Seitenwänden der Schiene 12 einklemmbar ist. Die Länge L2 der kurzen Seiten 46 ist so gewählt, dass diese ebenfalls größer ist als die Breite b des Spaltes 100 und der Verbindungsabschnitt 40 nur schräg, d.h. bei gekipptem Fußelement 16 in den Spalt 100 einführbar ist.

Jeweils zwei gegenüberliegende Ecken 48 der Grundfläche des Verbindungsabschnittes 40 sind abgerundet, um ein Verdrehen des Verbindungsabschnittes 40 innerhalb der Schiene zu erleichtern. Die anderen beiden Ecken 50 sind nicht abgerundet bzw. nur an der äußersten Spitze abgerundet.

Wie in Fig. 7 gut erkennbar ist, ist an der Rückfläche 52 des Verbindungsabschnittes 40 eine Fase 54 ausgebildet, welche als Einführschräge zum Einführen des Verbindungsabschnittes 40 in die Schiene 12 dient.

Korrespondierend dazu weist der Halsabschnitt 38 an der Vorderseite 56 eine Schräge 58 auf, welche ebenfalls als Einführschräge dient.

Der Verbindungsabschnitt 40 ist in Längsrichtung (x-Richtung) gegenüber der Mittelachse M verschoben. In einer Seitenansicht ist der Verbindungsabschnitt 40 gegenüber der Mittelachse M der Modulklemme 14 außermittig angeordnet. Der Verbindungsabschnitt 40 erstreckt sich in einer Seitenansicht (vgl. Fig. 3 und Fig. 7) überwiegend auf einer Seite der Mittelachse M. In einer Vorderansicht (vgl. Fig. 4 und Fig. 8) ist der Verbindungsabschnitt 40 mittig, d.h. symmetrisch zur Mittelachse M angeordnet.

Der Verbindungsabschnitt 40 bildet mit einer Oberseite 60 eine erste Anlagefläche 62, welche von innen an der Schiene 12 anliegt und in einer Endmontagelage von innen gegen die Schiene 12 gedrückt ist. Der Kragen 36 bildet mit seiner Unterseite 64 eine zweite Anlagefläche 66, welche von oben an der Schiene 12 anliegt. Die erste Anlagefläche 62 und die zweite Anlagefläche 66 erstrecken sich parallel zueinander und jeweils in einer x-y-Ebene. Die Deckwand 106 der Schiene 12 jeweils auf beiden Seiten des Spaltes 100 ist im Bereich des Halsabschnittes 38 zwischen der ersten Anlagefläche 62 und der zweiten Anlagefläche 66 anordenbar. Insgesamt ist durch die asymmetrische Anordnung des Verbindungsabschnittes 40 die wirksame Anlagefläche an der Schiene 12 vergrößert.

Die Oberseite 60 des Verbindungsabschnittes 40 weist jeweils Abschnitte mit Riffelungen 68 auf, dort wo die Oberseite 60 mit der Schiene 12 zur Anlage kommt. Die Riffelungen 68 sind in einer Endmontagelage in Querrichtung der Schiene 12 senkrecht zur Längsrichtung der Schiene 12 orientiert und wirken einem Verschieben der Modulklemme 14 entlang der Schiene 12 entgegen.

In Fig. 10 ist der Halsabschnitt 38 in einem Schnitt dargestellt. Wie gut erkennbar ist, ist die Querschnittsfläche des Halsabschnittes 38 unrund ausgebildet. Der Halsabschnitt 38 weist eine sich in Längsrichtung erstreckende Anlagekante 70 auf, welche in Endmontagelage an der Schiene 12 im Bereich des Spaltes 100 anliegt. Zusätzlich weist die Querschnittsfläche zwei gegenüberliegende Rundungen 72 zum Abgleiten an der Schiene 12 auf.

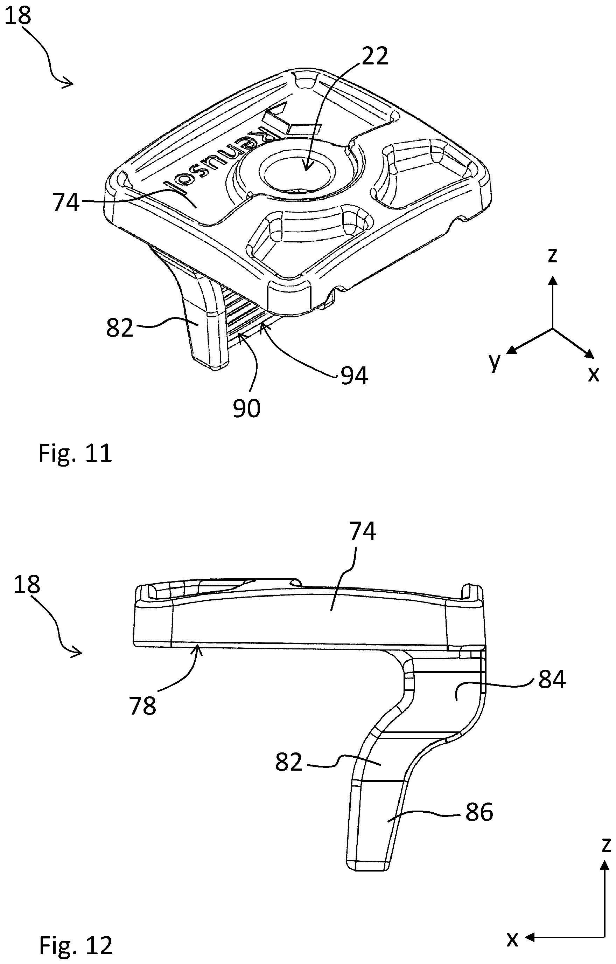

In den Figuren 11 bis 13 ist zudem das Haubenelement 18 im Detail dargestellt.

Das Haubenelement 18 weist einen Anlageabschnitt 74 auf, welcher eine rechteckförmige und hier quadratische Grundfläche aufweist. In dem Anlageabschnitt 74 ist die Öffnung 22 zur Einführung des Verbindungselementes 20 ausgebildet. Der Anlageabschnitt 74 ist plattenartig ausgebildet, mit einer größeren Erstreckung in Längsrichtung (x-Richtung) und Querrichtung (y-Richtung) als in Hochrichtung (z-Richtung).

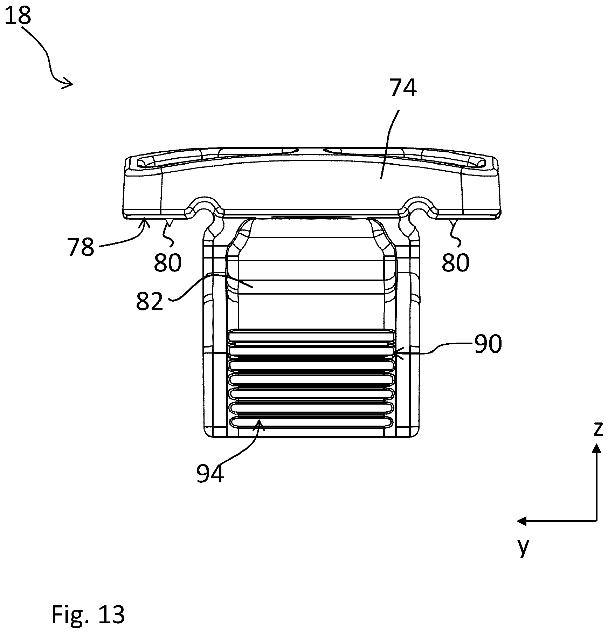

Wie in Fig. 13 erkennbar ist, sind an der Unterseite 78, d.h. auf der zum Fußelement 16 gerichteten Fläche des Anlageabschnittes 74 zwei voneinander beabstandete Dorne 80 ausgebildet. Die Unterseite 78 kommt mit mindestens einem Solarmodul 10 bzw. Rahmen zur Anlage. Bei der klemmenden Befestigung drücken sich die Dorne 80 in eine Eloxalschicht der Modulrahmen und stellen somit eine elektrisch leitende Verbindung zwischen den Solarmodulen 10 und der Schiene 12 bzw. zwischen zwei Solarmodulen 12 her.

Von dem Anlageabschnitt 74 erstreckt in Richtung des Fußelementes 16 ein Abstützabschnitt 82. Der Abstützabschnitt 82 erstreckt sich nur auf einer Seite der Mittelachse M verschoben. Bei der in den Figuren gezeigten Relativlage von Fußelement 16 und Haubenelement 18, bei Verwendung der Modulklemme 14 als Mittelklemme, erstreckt sich der Abstützabschnitt 82 in einer Seitenansicht auf der der Mittelachse M gegenüberliegenden Seite im Vergleich zu dem Verbindungsabschnitt 40.

Der Abstützabschnitt 82 ist wellenförmig geschwungen und weist einen ersten Wellenabschnitt 84 und einen zweiten Wellenabschnitt 86 auf.

Im Folgenden wird auf die Verbindung zwischen dem Fußelement 16 und dem Haubenelement 18 eingegangen.

Die Rückseite des Basisabschnittes 26 des Fußelementes 16 bildet eine erste Kontaktfläche 88 zum Haubenelement 18 und der zweite Wellenabschnitt 86 des Abstützabschnittes 82 bildet eine dazu korrespondierende zweite Kontaktfläche 90. Die erste Kontaktfläche 88 und die zweite Kontaktfläche 90 weisen jeweils eine Riffelung 92, 94 auf, wobei sich die einzelne Riffel in Querrichtung erstrecken. Das Fußelement 16 und das Haubenelement 18 stützen sich über die erste Kontaktfläche 88 und die zweite Kontaktfläche 90 aneinander ab. Durch die Riffel wird eine gegenüber Abrutschen besonders stabile Abstützung realisiert.

Ferner ist der Basisabschnitt 26 keilförmig ausgebildet, d.h. die erste Kontaktfläche 88 verläuft schräg zu Hochrichtung, wodurch sich bei einer Bewegung des Haubenelementes 18 in Richtung des Fußelementes 16 die Klemmkraft, welche der Abstützabschnitt 82 auf den Basisabschnitt 26 ausübt, erhöht.

Wie in Fig. 3 dargestellt, weist das Fußelement 26 eine gegenüber der Kontaktfläche 88 hervorragende Abstützrippe 96 auf, mit L-förmiger Geometrie. Diese dient zur Abstützung und Ausrichtung des Haubenelementes 18. Bei einem Verschrauben des Solarmoduls 10 kann die Abstützrippe abgeschert werden.

In Verbindung mit den Figuren 14 bis 21 wird im Folgenden die Montage einer Modulklemme 14 in einer Schiene 12 beschrieben.

In Fig. 14 und Fig. 15 ist die Modulklemme 14 in einer ersten Position relativ zur Schiene 12 gezeigt, es handelt sich um eine Vormontagelage. Die Modulklemme 14 und insbesondere das Fußelement 16 sind zum Einsetzen in die Schiene 12 gegenüber der Schiene 12 verkippt, sodass das die Modulklemme 14 über die Fase 54 am Verbindungsabschnitt 40 und die Schräge 58 am Halsabschnitt 38 in die Schiene 12 hineingleiten kann. Die Modulklemme 14 ist so ausgerichtete, dass die kurzen Seiten 46 des Verbindungsabschnittes 40 quer zur Nut 98 ausgerichtet sind und die langen Seiten 44 parallel zur Längsrichtung der Schiene 12.

In den Fig. 16 und 17 ist die Modulklemme 14 in einer zweiten Position relativ zur Schiene 12 gezeigt, diesmal in einem eingesetzten Zustand. Das Fußelement 16 ist so ausgerichtet, dass der Verbindungsabschnitt 40 derart in der Schiene 12 eingesetzt ist, dass sich die langen Seiten 44 parallel zum Spalt 100 und in Längsrichtung der Nut 98 erstreckt.

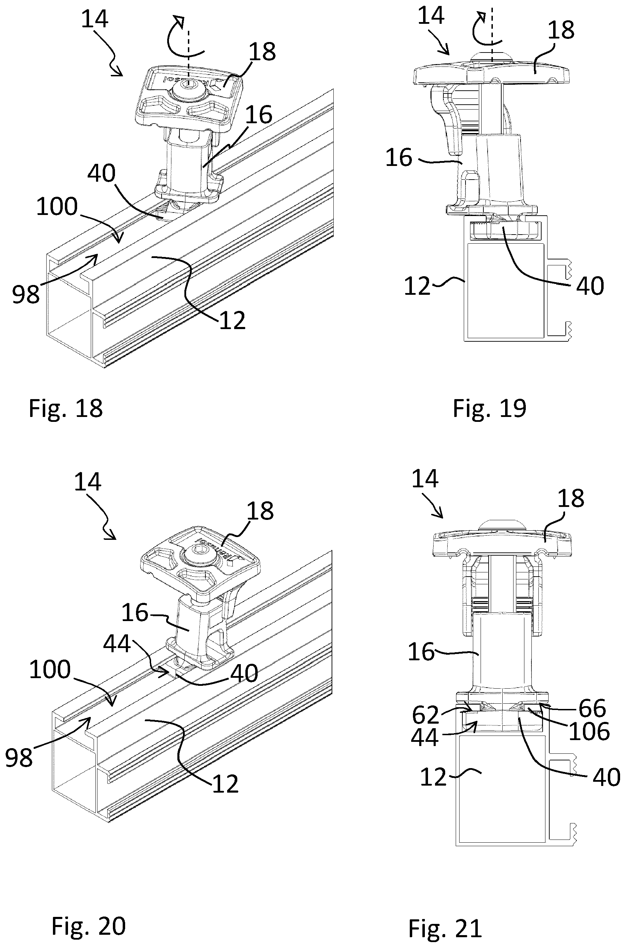

Um die Modulklemme 14, bzw. das Fußelement 16 in eine Endmontagelage zu bringen, in welcher die Modulklemme 14 fest mit der Schiene 12 verbunden ist, wird die Modulklemme 14 um die Mittelachse M gedreht (vgl. Fig. 18 und Fig. 19). Dabei können die Seitenwände 104 der Schiene 12 an den abgerundeten Ecken 48 des Verbindungsabschnittes 40 und die Deckwände 106 der Schiene 12 an den Rundungen 72 des Halsabschnittes 38 abgleiten.

Die Drehung erfolgt um 90°, bis die langen Seiten 44 des Verbindungsabschnittes 40 senkrecht zu den Seitenwänden 104 der Schiene 12 ausgerichtet sind und der Verbindungsabschnitt 40 zwischen den Seitenwänden 104 klemmend fixiert ist (vgl. Fig. 20 und 21).

Der Verbindungsabschnitt 40 liegt dann mit der Oberseite 60 von innen an der Schiene 12 an. Die Deckwände 106 der Schiene 12 sind dabei zwischen der ersten Anlagefläche 62 auf der Oberseite 60 des Verbindungselementes 40 und der zweiten Anlagefläche 66 an der Unterseite 64 des Kragens 36 aufgenommen. Die Modulklemme 14 ist form- und kraftschlüssig innerhalb der Schiene 12 fixiert. Durch Anziehen des Verbindungselementes 20 und Verklemmen eines Solarmoduls 10 kann die Klemmkraft noch erhöht werden.

### Bezugszeichenliste

- 10: Solarmodul
- 12: Schiene
- 14: Modulklemme
- 16: Fußelement
- 18: Haubenelement
- 20: Verbindungselement, Schraube
- 22: Öffnung
- 24: Öffnung

- 26: Basisabschnitt
- 28: Seitenflächen (Basisabschnitt)
- 30: Vorderfläche (Basisabschnitt)
- 32: Rückfläche (Basisabschnitt)
- 34: Durchgangsöffnung
- 36: Kragen
- 38: Halsabschnitt
- 39: Rückfläche (Halsabschnitt)
- 40: Verbindungsabschnitt
- 44: lange Seite
- 46: kurze Seite
- 48: abgerundete Ecke
- 50: Ecke
- 52: Rückfläche (Verbindungsabschnitt)
- 54: Fase
- 56: Vorderseite (Halsabschnitt)
- 58: Schräge (Halsabschnitt)
- 60: Oberseite (Verbindungsabschnitt)
- 62: erste Anlagefläche
- 64: Unterseite (Kragen)
- 66: zweite Anlagefläche
- 68: Riffelung
- 70: Anlagekante (Halsabschnitt)
- 72: Rundungen (Halsabschnitt)
- 74: Anlageabschnitt (Haubenelement)
- 78: Unterseite (Anlageabschnitt)
- 80: Dorn
- 82: Abstützabschnitt
- 84: erster Wellenabschnitt
- 86: zweiter Wellenabschnitt

- 88: erste Kontaktfläche
- 90: zweite Kontaktfläche
- 92: Riffelung
- 94: Riffelung
- 96: Abstützrippe

- 98: Nut
- 100: Spalt
- 102: Boden
- 104: Seitenwand
- 106: Deckwand

- M: Mittelachse
- L1: erste Länge
- L2: zweite Länge
- b: Spaltbreite

## Patentansprüche

1. Modulklemme (14) zum Befestigen eines Solarmoduls (10) an einer Schiene (12),
- mit einem Fußelement (16) zur Anbindung an die Schiene (12),
- mit einem Haubenelement (18) zur Anlage an dem Solarmodul (10),
- mit einem Verbindungselement (20), welches das Fußelement (16) und das Haubenelement (18) miteinander verbindet,
wobei das Fußelement (16) in einer Hochrichtung (z) relativ zu dem Haubenelement (18) verlagerbar ist,
**dadurch gekennzeichnet, dass**
das Fußelement (16) an dem unteren Ende einen Verbindungsabschnitt (40) aufweist, wobei der Verbindungsabschnitt (40) nach Art eines Hammerkopfes ausgebildet ist.

2. Modulklemme nach dem vorstehenden Anspruch,
**dadurch gekennzeichnet, dass**
die Oberseite (60) des Verbindungsabschnittes (40) eine erste Anlagefläche (62) bildet und in Hochrichtung (z) beabstandet davon an dem Fußelement (16) eine zweite Anlagefläche (66) ausgebildet ist, wobei zwischen der ersten Anlagefläche (62) und der zweiten Anlagefläche (66) eine Deckwand (106) der Schiene (12) anordenbar ist.

3. Modulklemme nach einem der vorstehenden Ansprüche,
**dadurch gekennzeichnet, dass**
der Verbindungsabschnitt (40) in einer Seitenansicht des Fußelementes (16) in Bezug auf eine Mittelachse (M) des Fußelementes (16) außermittig angeordnet ist.

4. Modulklemme nach einem der vorstehenden Ansprüche,
**dadurch gekennzeichnet,**
**dass** die Oberseite (60) des Verbindungsabschnittes (40) zumindest teilweise eine Riffelung (68) aufweist.

5. Modulklemme nach einem der vorstehenden Ansprüche,
**dadurch gekennzeichnet, dass**
der Verbindungsabschnitt (40) an seiner Rückfläche (52) eine Fase (54) aufweist und/oder dass ein sich an den Verbindungsabschnitt (40) anschließender Halsabschnitt (38) an der Vorderseite (56) eine Schräge (58) aufweist.

6. Modulklemme nach einem der vorstehenden Ansprüche,
**dadurch gekennzeichnet, dass**
sich an den Verbindungsabschnitt (40) ein Halsabschnitt (38) anschließt, welcher im Querschnitt betrachtet unrund ausgebildet ist.

7. Modulklemme nach einem der vorstehenden Ansprüche,
**dadurch gekennzeichnet, dass**
das Fußelement (16) und das Haubenelement (18) jeweils eine Kontaktfläche (88, 90) mit einer Riffelung (92, 94) aufweisen, wobei sich das Fußelement (14) und das Haubenelement (18) über die Kontaktflächen (88, 90) aneinander abstützen.

8. Modulklemme nach einem der vorstehenden Ansprüche,
**dadurch gekennzeichnet, dass**
die Kontaktfläche (88) des Fußelementes (16) schräg zur Hochrichtung (z) ausgerichtet ist.

9. Modulklemme nach einem der vorstehenden Ansprüche,
**dadurch gekennzeichnet, dass**
das Fußelement (16) an der Kontaktfläche (88) eine Abstützrippe (96) zur Vormontage des Haubenelementes (18) aufweist.

10. Modulklemme nach einem der vorstehenden Ansprüche,
**dadurch gekennzeichnet, dass**
das Haubenelement (18) an einem zum Fußelement (14) gerichteten Anlageabschnitt (74) mindestens einen Dorn (80) aufweist.

11. System umfassend ein Solarmodul (10), eine Schiene (12) und eine Modulklemme (14) nach einem der vorstehenden Ansprüche, wobei das Solarmodul (10) mittels der Modulklemme (14) gegenüber der Schiene (12) klemmend fixiert ist, wobei die Modulklemme (14) ein Fußelement (16) mit einem hammerkopfartig ausgebildetem Verbindungsabschnitt (40) aufweist, mit einer rechteckförmigen Grundfläche mit zwei langen Seiten (44) und zwei kurzen Seiten (46), und wobei die Länge (L1) der langen Seiten (44) größer ist als die Breite (b) des Spaltes (100) in der Schiene (12).

12. System nach dem vorstehenden Anspruch,
**dadurch gekennzeichnet, dass**
die kürzeren Seiten (46) des Verbindungsabschnittes (40) ebenfalls eine größere Länge (L2) aufweisen als die Breite (b) des Spaltes (100) der Schiene (12).

13. Verfahren zur Montage einer Modulklemme (14) zum Befestigen eines Solarmoduls (10) an einer Schiene (12), wobei ein Fußelement (16) der Modulklemme (14) zunächst mit einem hammerkopfartigen Verbindungsabschnitt (40) in eine Nut (98) in der Schiene (12) derart eingesetzt wird, dass sich die langen Seiten (44) des Verbindungsabschnittes (40) in Längsrichtung der Schiene (12) erstrecken und wobei anschließend an das Einsetzen des Verbindungsabschnittes (40) in die Schiene (12) das Fußelement (16) um die Hochrichtung (z) verdreht wird, bis sich die langen Seiten (44) des Verbindungsabschnittes (40) quer zur Längsrichtung der Schiene (12) erstrecken und der Verbindungsabschnitt (40) zwischen den Seitenwänden (104) der Schiene (12) klemmend fixiert ist.

14. Verfahren nach dem vorstehenden Anspruch,
**dadurch gekennzeichnet, dass**
der Verbindungsabschnitt (40) beim Einsetzen schräg in die Schiene (12) eingeführt wird.
